# EUROPÄISCHE PATENTANMELDUNG

(11) **EP 4 498 037 A1**
(43) Veröffentlichungstag der Anmeldung: **29.01.2025**
(21) Anmeldenummer: 23187651.7
(22) Anmeldetag: 25.07.2023
(51) Int. Cl.: G01C 15/00, G01B 3/16, G01B 3/56, G01B 21/02

(54) **HANDMESSGERÄT**

(71) Anmelder: Mafell AG, 78727 Oberndorf a.N. (DE)
(72) Erfinder: MAIER, Lukas, 78628 Rottweil (DE); DAUS, Felix, 78655 Dunningen-Seedorf (DE)
(74) Vertreter: Manitz Finsterwald Patent- und Rechtsanwaltspartnerschaft mbB

(57) **Zusammenfassung**

Die Erfindung betrifft ein Handmessgerät zur Ermittlung von für eine Werkstückbearbeitung erforderlichen Werten zu wenigstens zwei Messgrößen, nämlich zu einem Winkel und zu wenigstens einem Abstand, wobei das Handmessgerät zwei Schenkel, eine Winkelmesseinrichtung, eine Entfernungsmesseinrichtung und eine Verarbeitungseinrichtung umfasst, wobei die Schenkel eine Messebene aufspannen und um eine senkrecht zur Messebene verlaufende Schwenkachse relativ zueinander verschwenkbar sind, wobei die Winkelmesseinrichtung dazu ausgebildet ist, einen Wert für den Winkel zwischen den beiden Schenkeln zu messen, wobei die Entfernungsmesseinrichtung dazu ausgebildet ist, in Verlängerung eines der Schenkel eine Entfernung zu messen, wobei die Verarbeitungseinrichtung dazu ausgebildet, aus der gemessenen Entfernung und einer Strecke, deren Länge mit dem Winkel zwischen den Schenkeln variiert, einen Wert für den Abstand zu bestimmen, und wobei der Verarbeitungseinrichtung die Abhängigkeit der Länge der Strecke von dem Winkel bekannt ist und die Verarbeitungseinrichtung dazu ausgebildet ist, beim Bestimmen des Wertes für den Abstand automatisch die Winkelabhängigkeit der Länge der Strecke zu berücksichtigen.

## Beschreibung

Die Erfindung betrifft ein Handmessgerät zur Ermittlung von für eine Werkstückbearbeitung erforderlichen Werten zu wenigstens zwei Messgrößen, nämlich zu einem Winkel und zu wenigstens einem Abstand, wobei das Handmessgerät zwei Schenkel, eine Winkelmesseinrichtung, eine Entfernungsmesseinrichtung und eine Verarbeitungseinrichtung umfasst, wobei die Schenkel eine Messebene aufspannen und um eine senkrecht zur Messebene verlaufende Schwenkachse relativ zueinander verschwenkbar sind, wobei die Winkelmesseinrichtung dazu ausgebildet ist, einen Wert für den Winkel zwischen den beiden Schenkeln zu messen, und wobei die Entfernungsmesseinrichtung dazu ausgebildet ist, in Verlängerung eines der Schenkel eine Entfernung zu messen.

Die Erfindung betrifft außerdem ein Ausmesssystem mit einem derartigen Handmessgerät. Ferner betrifft die Erfindung ein Bearbeitungssystem mit einem derartigen Handmessgerät oder mit einem derartigen Ausmesssystem. Außerdem betrifft die Erfindung ein Verfahren zum Erzeugen einer digitalen Ansicht einer realen räumlichen Gegebenheit, insbesondere eines Grundrisses eines Raumes eines Gebäudes.

Handmessgeräte der eingangs genannten Art sind grundsätzlich bekannt, beispielsweise aus DE 10 2009 032 256 A1. Dieses bekannte Handmessgerät ist als sogenannte Schmiege- oder Winkelschmiege ausgebildet und kann zum Beispiel dazu dienen, einen Raum auszumessen, um Winkel und Längen von zuzuschneidenden Brettern oder Leisten zu ermitteln. Diese Messwerte können von dem Handmessgerät an eine Bearbeitungsmaschine übertragen werden, die eine oder mehrere Einstelleinrichtungen aufweist, welche in Abhängigkeit von den übertragenen Messwerten automatisch verstellbar sind.

Dieses bekannte Konzept kann für eine erhebliche Entlastung der Bedienperson sorgen, weist aber auch Nachteile auf. Wenn mit der Schmiege der Winkel in einer Raumecke gemessen und zusätzlich der Abstand zwischen dieser Raumecke und einer weiteren Raumecke in Verlängerung eines der Schenkel der Schmiege gemessen werden soll, kann es aufgrund der realen Abmessungen der Schenkel der Schmiege zu einer von dem Winkel abhängigen Nullpunktverschiebung, was die Entfernungsmessung verfälschen kann. Ein weiterer Nachteil ist, dass mit dem bekannten Handmessgerät nur Einzelmessungen ausgeführt und anschließend an der Bearbeitungsmaschine vollkommen unabhängig voneinander verarbeitet werden können. Das automatische Einstellen der Bearbeitungsmaschine stellt zwar eine Vereinfachung für die Bedienperson dar, die aber weiterhin nacheinander für jedes einzelne Werkstück eine Messung vornehmen und dann die Bearbeitung durchführen muss. Das Verlegen von Parkett beispielsweise ist damit weiterhin sehr aufwändig, da die nächste Einzelmessung erst dann vorgenommen werden kann, wenn ein aufgrund der vorherigen Einzelmessung zugeschnittenes Parkettstück verlegt ist.

Aufgabe der Erfindung ist es daher, eine einfache Möglichkeit zum Ausmessen von räumlichen Gegebenheiten, insbesondere von Räumen in Gebäuden, zu schaffen, die zudem genaue Messwerte liefert.

Die Lösung dieser Aufgabe erfolgt jeweils durch die Merkmale der unabhängigen Ansprüche.

Das erfindungsgemäße Handmessgerät zeichnet sich dadurch aus, dass die Verarbeitungseinrichtung dazu ausgebildet ist, aus der gemessenen Entfernung und einer Strecke, deren Länge mit dem Winkel zwischen den Schenkeln variiert, einen Wert für den Abstand zu bestimmen, und dass der Verarbeitungseinrichtung die Abhängigkeit der Länge der Strecke von dem Winkel bekannt ist und die Verarbeitungseinrichtung dazu ausgebildet ist, beim Bestimmen des Wertes für den Abstand automatisch die Winkelabhängigkeit der Länge der Strecke zu berücksichtigen.

Durch die automatische Berücksichtigung der Winkelabhängigkeit kann der Effekt einer eingangs erwähnten Nullpunktverschiebung auf komfortable Weise kompensiert werden. Das erfindungsgemäße Handmessgerät liefert für jeden eingestellten Winkel zwischen den beiden Schenkeln automatisch aus der Entfernungsmessung einen korrekten Wert für den jeweils zu ermittelnden Abstand.

Das Handmessgerät ist insbesondere als Schmiege oder Winkelschmiege ausgebildet. Bei dem zu ermittelnden Abstand handelt es sich insbesondere um den Abstand zwischen zwei Punkten der jeweiligen Umgebung. Die Umgebung ist insbesondere ein Raum in einem Gebäude und bei dem zu ermittelnden Abstand handelt es sich insbesondere um den Abstand zwischen zwei aufeinanderfolgenden Ecken des Raumes. Wenn beispielsweise zum Verlegen von Parkett in dem Raum dessen Grundriss bestimmt werden soll, liefert die Schmiege den Winkel zwischen den beiden eine jeweilige Ecke bildenden Wänden am Boden sowie den Abstand zwischen dieser Ecke und einer weiteren Ecke. Die Verbindungsgerade zwischen diesen beiden Ecken verläuft parallel zu demjenigen Schenkel der Schmiege, der mit der Entfernungsmesseinrichtung versehen ist. Die gemessene Entfernung und die von dem Winkel abhängige Strecke liegen auf dieser Verbindungsgeraden. Die Länge dieses Schenkels ist bekannt und kann somit bei der Bestimmung des Abstandes zwischen den beiden Ecken berücksichtigt werden.

Das erfindungsgemäße Handmessgerät ist somit besonders vorteilhaft beim Bestimmen von Grundrissen einsetzbar, hierauf aber nicht beschränkt. Das Bestimmen von Winkeln und zugehörigen Entfernungen bzw. Abständen kann beispielsweise auch beim Bestimmen von sogenannten Deckenrissen oder Seitenrissen angewendet werden.

Das erfindungsgemäße Ausmesssystem dient zum, insbesondere automatischen, Erzeugen einer digitalen Ansicht einer realen räumlichen Gegebenheit, insbesondere eines Grundrisses eines Raumes eines Gebäudes, aus einer Mehrzahl von Einzelmessungen, die jeweils für eine Werkstückbearbeitung erforderliche Werte zu wenigstens zwei Messgrößen liefern, nämlich zu einem Winkel und zu wenigstens einem Abstand. Das Ausmesssystem umfasst ein Handmessgerät zur Durchführung der Einzelmessungen sowie eine Auswerteeinrichtung, die dazu ausgebildet ist, aus den Werten der Einzelmessungen die digitale Ansicht zu erzeugen.

Bei dem Handmessgerät kann es sich um ein erfindungsgemäßes Handmessgerät mit der erläuterten automatischen Berücksichtigung der Winkelabhängigkeit handeln, wobei dies aber nicht zwingend ist. Das erfindungsgemäße Ausmesssystem zeichnet sich dadurch aus, dass die mit dem Handmessgerät vorgenommenen Einzelmessungen nicht voneinander unabhängig sind, sondern mittels der Auswerteeinrichtung miteinander in Beziehung gesetzt werden, um gemeinsam ein Ganzes zu bilden, nämlich die digitale Ansicht einer jeweiligen realen räumlichen Gegebenheit, beispielsweise die digitale Ansicht eines Grundrisses eines Gebäuderaumes.

Das erfindungsgemäße Ausmesssystem ermöglicht es also beispielsweise, zunächst aus mehreren Einzelmessungen den gesamten Grundriss eines Raumes einschließlich aller Winkel und Abstände zu ermitteln. Auf dieser Basis können dann alle Werkstückbearbeitungen durchgeführt werden. Beim Verlegen von Parkett bedeutet dies beispielsweise, dass anhand des digitalen Grundrisses zunächst alle Parkettstücke zugesägt und dann gewissermaßen in einem Rutsch verlegt werden können. Die Parkettverlegung erfolgt dann nicht nur exakt entsprechend den geometrischen Gegebenheiten des Raumes, sondern zudem äußerst schnell und effizient. Lärm und Verschmutzung sind auf ein Minimum reduziert, da alle Bearbeitungsvorgänge praktisch auf einmal, d.h. unmittelbar hintereinander, durchgeführt werden können und eine Maschine zum Zusägen der Parkettstücke nicht über einen langen Zeitraum hinweg immer wieder ein- und ausgeschaltet werden muss.

In einer vorteilhaften Weiterbildung des Ausmesssystems kann die Auswerteeinrichtung dazu ausgebildet sein, aus den Werten der Einzelmessungen und/oder aus der daraus erzeugten digitalen Ansicht einen Bearbeitungsplan für zumindest eine zur Werkstückbearbeitung vorgesehene Bearbeitungsmaschine abzuleiten. Der Bearbeitungsplan kann beispielsweise eine Schnittliste für die als Säge ausgebildete Bearbeitungsmaschine sein. Bei der bereits erwähnten Verlegung von Parkett zum Beispiel kann diese Schnittliste komplett in einem Zug abgearbeitet werden, bevor mit dem Verlegen auch nur eines einzigen Parkettstücks begonnen wird.

Eine weitere Verbesserung kann mit dem erfindungsgemäßen Bearbeitungssystem erzielt werden, welches sich dadurch auszeichnet, dass zumindest die Messwerte einer der Messgrößen und/oder aus diesen Messwerten abgeleitete Daten an die Bearbeitungsmaschine übertragbar sind und die Bearbeitungsmaschine wenigstens eine Einstelleinrichtung aufweist, die entsprechend den zu der Messgröße übertragenen Messwerten bzw. Daten automatisch verstellbar ist.

In einer Weiterbildung kann die Bearbeitungsmaschine beispielsweise zwei Einstelleinrichtungen aufweisen, insbesondere eine für einen Winkel an einem Werkstück und eine weitere für eine Länge des jeweiligen Werkstücks. Beim Abarbeiten einer erfindungsgemäß erzeugten Schnittliste für das Verlegen von Parkett beispielsweise braucht hierbei die Bedienperson somit nicht einmal mehr die erforderlichen Winkel- und Längeneinstellungen der insbesondere als Säge ausgebildeten Bearbeitungsmaschine vorzunehmen. Alle für das Parkett eines Raumes benötigten Parkettstücke können auf diese Weise nicht nur mit hoher Genauigkeit entsprechend den geometrischen Gegebenheiten des jeweiligen Raumes, sondem außerdem äußerst schnell und effizient produziert und anschließend ohne Unterbrechung verlegt werden.

Vorteilhafte Weiterbildungen der Erfindung sind auch in den abhängigen Ansprüchen, der nachfolgenden Beschreibung sowie der Zeichnung angegeben.

Die Verarbeitungseinrichtung kann dazu ausgebildet sein, beim Bestimmen des Wertes für den Abstand die bekannte Länge des Schenkels, in dessen Verlängerung die Entfernungsmesseinrichtung die Entfernung misst, oder einen Teil davon zu berücksichtigen. In Abhängigkeit davon, von wo aus am Schenkel die Entfernung gemessen wird, kann dann die gesamte Länge des Schenkels oder lediglich ein Teil davon berücksichtigt werden.

Was das erfindungsgemäße Handmessgerät anbetrifft, so kann vorgesehen sein, dass die der Verarbeitungseinrichtung bekannte Winkelabhängigkeit der Länge der Strecke empirisch ermittelt worden und in der Verarbeitungseinrichtung selbst oder in einem für diese zugänglichen Speicher, insbesondere einem Speicher des Handmessgeräts, abgelegt ist. Empirisch ermittelt bedeutet dabei, dass die die Winkelabhängigkeit repräsentierenden und beispielsweise in Form einer Tabelle abgelegten Daten anhand des jeweiligen konkreten Handmessgeräts - oder eines Repräsentanten einer jeweiligen Gerätemodells - erhoben wurden.

Alternativ kann das Handmessgerät derart ausgebildet sein, dass die Winkelabhängigkeit der Länge der Strecke aus der Geometrie des Handmessgeräts berechenbar ist. Auf ein mögliches konkretes Ausführungsbeispiel hierzu wird an anderer Stelle näher eingegangen.

Unabhängig davon, ob die Winkelabhängigkeit empirisch ermittelt worden oder aus der Geometrie des Handmessgerätes berechenbar ist, kann somit die Verarbeitungseinrichtung während des Messvorgangs aus einem jeweiligen Winkelmesswert automatisch den zugehörigen Wert für die Länge der winkelabhängigen Strecke ermitteln, also entweder durch Ablesen aus einem Speicher oder durch Berechnen anhand von beispielsweise in der Verarbeitungseinrichtung des Handmessgerätes hinterlegten Rechenvorschriften (Formeln).

Wenn das Handmessgerät ein Bestandteil eines Systems ist, kann ein Speicher für die die Winkelabhängigkeit repräsentierenden Daten außerhalb des Handmessgeräts vorgesehen sein, beispielsweise in einem externen Gerät wie z.B. einem Werkzeug, einer Bearbeitungsmaschine, einem Smartphone, einem Tablet, einem Notebook oder einem stationären Rechner.

Eine vergleichsweise einfache Berechenbarkeit der Winkelabhängigkeit kann bei einer Ausführungsform beispielsweise dadurch ermöglicht werden, dass die Schenkel die gleiche in der Messebene gemessene Breite aufweisen und die Schwenkachse mit der Schnittgeraden der beiden auf der Messebene senkrecht stehenden Mittelebenen der beiden Schenkel zusammenfällt. Alternativ kann vorgesehen sein, dass die Schenkel von unterschiedlicher Breite sind und die Schwenkachse auf der Mittelebene eines der beiden Schenkel liegt, insbesondere desjenigen Schenkels, in dessen Verlängerung die Entfernungsmesseinrichtung die Entfernung misst.

Des Weiteren kann vorgesehen sein, dass der Übergang zwischen den beiden Schenkeln abgerundet ist. Insbesondere kann der Übergang von einem Kreisbogen gebildet sein, dessen Mittelpunkt auf der Schwenkachse liegt, insbesondere wobei eine den Mittelpunkt und den Scheitelpunkt des Übergangs verbindende Gerade die Winkelhalbierende des jeweils eingestellten Winkels zwischen den Schenkeln ist.

Die vorstehend beschriebenen möglichen Geometrien des Handmessgerätes sind jedoch nicht zwingend. Auch bei Schenkeln von beliebig unterschiedlicher Breite und einer beliebigen Lage der Schwenkachse kann eine Berechenbarkeit der Winkelabhängigkeit grundsätzlich möglich, dabei aber unterschiedlich komplex sein.

Gemäß weiteren Ausführungsbeispielen kann die Winkelmesseinrichtung dazu ausgebildet sein, sowohl Innenwinkel als auch Außenwinkel zu messen, die jeweils sowohl 90° betragen können, kleiner als 90° sein können oder größer als 90° sein können. Damit können problemlos Grundrisse auch solcher Räume ermittelt werden, die Rücksprünge oder Vorsprünge beispielsweise aufgrund von Kaminen, Erkern etc. aufweisen.

Des Weiteren kann vorgesehen sein, dass zumindest einer der Schenkel eine Anzeigeeinheit aufweist, auf der die Messwerte und/oder daraus abgeleitete Daten für eine Bedienperson darstellbar sind. Die Anzeigeeinheit kann beispielsweise ein herkömmliches, dem Stand der Technik entsprechendes Display umfassen. Die Darstellung von aus den Messwerten abgeleiteten Daten können dazu dienen, der Bedienperson nützliche Zusatzinformationen zu vermitteln. Beispielsweise kann die Winkelhalbierende eines jeweils gemessenen Winkels angezeigt werden.

Des Weiteren kann vorgesehen sein, dass zumindest einer der Schenkel eine Bedieneinheit aufweist. Die Bedieneinheit kann eine Mehrzahl von Funktionen bereitstellen. Neben dem Ein- und Ausschalten kann der Bedienperson beispielsweise ermöglicht werden, eine Displayhelligkeit einzustellen oder eine Beleuchtung des Displays ein- und auszuschalten. Auch kann z.B. vorgesehen sein, zwischen Maßsystemen bzw. Einheitensystemen zu wechseln, beispielsweise zwischen metrischen Längeneinheiten und angloamerikanischen Längeneinheiten.

Gemäß weiteren Ausführungsformen kann das Handmessgerät zumindest eine Schnittstelle für eine drahtlose oder drahtgebundene Übermittlung der Messwerte und/oder von daraus abgeleiteten Daten an eine oder mehrere externe Einrichtungen umfassen. Eine externe Einrichtung kann z.B. ein Werkzeug, eine Bearbeitungsmaschine, ein Smartphone, ein Tablet, ein Notebook oder ein stationärer Rechner sein.

Wie vorstehend bereits erwähnt, zeichnet sich das erfindungsgemäße Ausmesssystem unter anderem dadurch aus, dass eine Auswerteeinrichtung vorgesehen ist, die dazu ausgebildet ist, aus den Werten der Einzelmessungen die digitale Ansicht der jeweiligen realen räumlichen Gegebenheit, beispielsweise eines Grundrisses eines Raumes, zu erzeugen. Diese Auswerteeinrichtung kann ein Bestandteil des Handmessgeräts sein. Beispielsweise kann sie in dessen Verarbeitungseinrichtung integriert oder mit dieser verbunden sein. Alternativ kann die Auswerteeinrichtung in einem separaten Gerät, beispielsweise einem Smartphone, einem Tablet, einem Notebook oder einem stationären Rechner, oder in einer zur Werkstückbearbeitung vorgesehenen Bearbeitungsmaschine vorgesehen sein.

Im Zusammenhang mit einem erfindungsgemäßen Bearbeitungssystem kann eine Schnittstelle des Handmessgeräts dazu ausgebildet sein, die Messwerte bzw. daraus abgeleitete Daten an die Bearbeitungsmaschine zu übermitteln, wobei diese Übermittlung direkt oder indirekt über eine oder mehrere externe Einrichtungen erfolgen kann. Bei dieser externen Einrichtung kann es sich wiederum beispielsweise um ein Smartphone, ein Tablet, ein Notebook oder einen stationären Rechner handeln.

Die Erfindung betrifft ferner ein Verfahren zum, insbesondere automatischen, Erzeugen einer digitalen Ansicht einer realen räumlichen Gegebenheit, insbesondere eines Grundrisses eines Raumes eines Gebäudes, aus einer Mehrzahl von Einzelmessungen, die jeweils für eine Werkstückbearbeitung erforderliche Werte zu wenigstens zwei Messgrößen liefern, nämlich zu einem Winkel und zu wenigstens einem Abstand, wobei bei dem Verfahren mittels eines Handmessgeräts, insbesondere eines erfindungsgemäßen Handmessgeräts, die Einzelmessungen nacheinander durchgeführt werden, und mittels einer Auswerteeinrichtung aus den Werten der Einzelmessungen die digitale Ansicht erzeugt wird.

Insbesondere kann dabei aus jeder Einzelmessung ein Vektor in einer Ebene gebildet und aus allen Vektoren die digitale Ansicht in Form einer geschlossenen Kontur in der Ebene gebildet werden.

Die Erfindung wird im Folgenden beispielhaft unter Bezugnahme auf die Zeichnung beschrieben. Es zeigen:
- Fig. 1: schematisch ein Handmessgerät gemäß einer möglichen Ausführungsform der Erfindung,
- Fig. 2: schematisch eine mögliche Anwendung der Erfindung,
- Fig. 3: schematisch eine weitere mögliche Anwendung der Erfin-dung, und
- Fig. 4a, 4b, 5 - 9: Darstellungen zur Abstandsermittlung mit einem erfindungs-gemäßen Handmessgerät in unterschiedlichen geometri-schen Situationen.

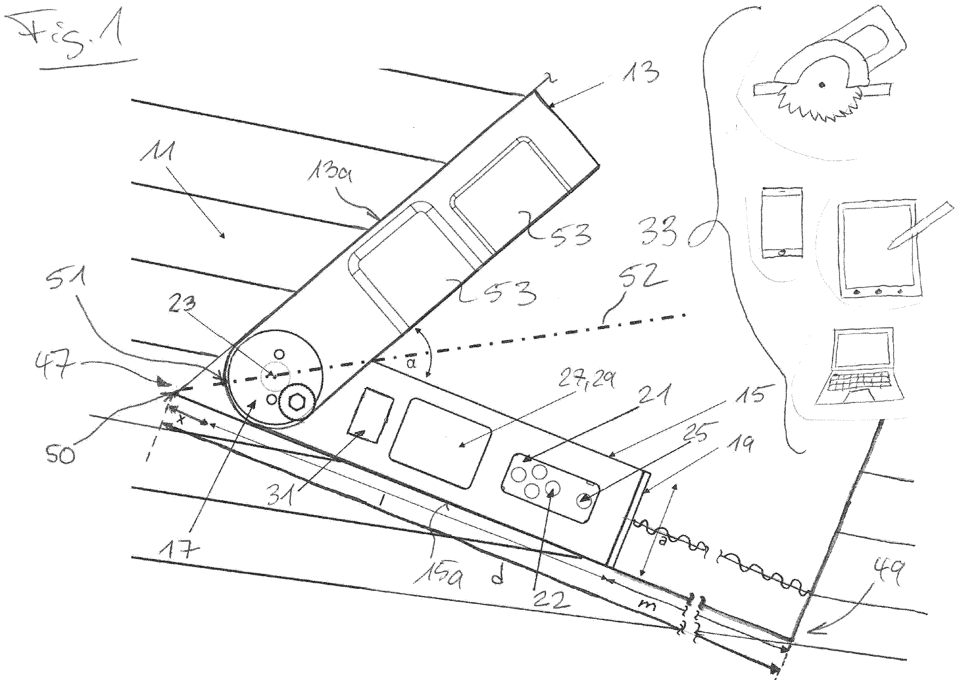

Das erfindungsgemäße Handmessgerät 11 gemäß Fig. 1 ist als Winkelschmiege ausgebildet, die zwei jeweils von einem Gehäuse gebildete Schenkel 13 gleicher Breite a aufweist. Die beiden Schenkel 13, 15 spannen eine Messebene auf und sind um eine senkrecht zur Messebene verlaufende Schwenkachse 23 relativ zueinander verschwenkbar. Hierdurch kann ein Winkel α zwischen den beiden Schenkeln 13, 15 eingestellt werden.

Die Geometrie des Handmessgeräts 11 ist hier vergleichsweise einfach derart gewählt, dass die Schwenkachse 23 mit einer Schnittgeraden der beiden auf der Messebene senkrecht stehenden Mittelebenen der beiden Schenkel 13, 15 zusammenfällt. Dies ist gleichbedeutend damit, dass die Schwenkachse 23 auf der Winkelhalbierenden 52 des jeweils eingestellten Winkels α zwischen den beiden Schenkeln 13, 15 liegt. Der Übergang zwischen den beiden Schenkeln 13, 15 ist abgerundet und von einem Kreisbogen gebildet, dessen Mittelpunkt auf der Schwenkachse 23 liegt, wobei der Scheitelpunkt 51 des Übergangs auf der Winkelhalbierenden 52 liegt.

Ferner ist die Winkelschmiege 11 mit einer Winkelmesseinrichtung 17 versehen. Diese kann beispielsweise in Form eines Potentiometers vorgesehen sein, das für jeden eingestellten Winkel α einen Spannungswert bereitstellt, der beispielsweise in einem den gesamten Winkelbereich von 360° abbildenden Bereich zwischen 0 und 3 V liegt. Mittels eines Analog/Digital-Wandlers kann die Spannung in ein digitales Signal umgewandelt werden, das beispielsweise mittels eines Mikrocontrollers verarbeitet werden kann. Ein einem Winkelwert von α = 0° einsprechender Bezugspunkt kann bereits bei der Montage des Handmessgeräts 11 eingestellt werden, so dass eine Bedienperson keine Kalibrierung vornehmen muss. Die Winkelmesseinrichtung 17 kann dabei derart ausgebildet sein, dass die beiden Schenkel 13, 15 endlos im Kreis gegeneinander verdreht werden können und die Winkelmesseinrichtung 17 stets den korrekten Winkel α zwischen den beiden Schenkeln bereitstellt. Derartige Winkelmess-Potentiometer sind auf dem Markt erhältlich und können sehr genaue Winkelmesswerte liefern, besitzen also eine für Anwendungen des Handmessgeräts ausreichend hohe Winkelauflösung.

Des Weiteren ist die Winkelschmiege 11 an einem Schenkel 15 mit einer Verarbeitungseinrichtung 21 versehen, die unter anderem den erwähnten Mikrocontroller 22 sowie einen Speicher 25 aufweist.

Die Verarbeitungseinrichtung 21 empfängt nicht nur die Winkelmesswerte von der Winkelmesseinrichtung 17, sondern außerdem Entfernungsmesswerte von einer in diesen Schenkel 15 integrierten Entfernungsmesseinrichtung 19. Diese kann beispielsweise als Laser-, Radar- oder Ultraschall-Entfernungsmesseinheit ausgebildet sein. Auch derartige Entfernungsmesseinrichtungen sind im Handel erhältlich und liefern für Anwendungen des Handmessgeräts 11 ausreichend genaue Messwerte m für die Entfernung zwischen dem stirnseitigen Ende des Schenkels 15 und einem jeweiligen Objekt, an dem die jeweils ausgesendeten Signale reflektiert werden. Die Entfernungsmessung muss nicht von dem stirnseitigen Ende des Schenkels 15 ausgehen, denn die Entfernungsmesseinrichtung 19 kann alternativ auch an anderer Stelle auf dem Schenkel 15 angeordnet sein. Dies ist dann bei der an anderer Stelle erläuterten Bestimmung des gewünschten Abstands entsprechend zu berücksichtigen.

In einer abgewandelten Ausführung kann auch mittels einer weiteren Entfernungsmesseinrichtung in Verlängerung des anderen Schenkels 13 ein Entfernungsmesswert bestimmt und für die Verarbeitungseinrichtung 21 bereitgestellt werden. Das Handmessgerät kann dann zusätzlich zu dem Winkel α zwei Entfernungsmesswerte liefern. Dies kann die Vermessung einer räumlichen Gegebenheit beschleunigen oder dadurch in der Genauigkeit verbessern, dass ohne Mehraufwand Abstände mehrfach gemessen werden.

Der Mikrocontroller 22 der Verarbeitungseinrichtung 21 ist derart programmiert, dass automatisch aus einem jeweils mittels der Winkelmesseinrichtung 17 gemessenen Wert für den Winkel α zwischen den beiden Schenkeln 13, 15 und dem mittels der Entfernungsmesseinrichtung 19 gemessenen Wert für die Entfernung m ein Wert für einen Abstand d berechnet wird, der sich aus dem gemessenen Entfernungswert m, der bekannten Länge I des Schenkels 15 und der Länge x einer Strecke zusammensetzt, die bis zur Schnittlinie 50 gedachter Verlängerungen der beiden Außenseiten 13a, 15a der Schenkel 13, 15 reicht.

Eine Anwendung des Handmessgeräts 11 besteht darin, einen Raum eines Gebäudes auszumessen, um dessen Grundriss zu bestimmen, so dass am Boden des Raumes beispielsweise ein Parkett verlegt werden kann. Zum Bestimmen des Grundrisses ist es erforderlich, die Winkel der einzelnen Raumecken und die Abstände zwischen aufeinanderfolgenden Raumecken zu bestimmen.

Wie in Fig. 1 dargestellt, wird hierzu die Winkelschmiege 11 am Boden des Raumes in die jeweils auszumessende Raumecke 47 gelegt, wobei die beiden Außenseiten 13a, 15a der Schenkel 13, 15 an den die Raumecke 47 definierenden Raumwänden anliegen. Da die erwähnte Schnittlinie 50 zwischen den gedachten Verlängerungen der beiden Außenseiten 13a, 15a in dieser Raumecke 47 liegt, gilt für den Abstand d zwischen dieser Raumecke 47 und der in Verlängerung des Schenkels 15 nächsten Raumecke 49 d = x + I + m, wobei m - wie erwähnt - mittels der Entfernungsmesseinrichtung 19 vom stirnseitigen Ende des Schenkels 15 aus gemessen wird, I die bekannte Länge des Schenkels 15 ist und die Strecke x von dem eingestellten Winkel α und somit von dem Abstand des Scheitelpunktes 51 von der Schnittlinie 50 und daher der Raumecke 47 abhängig ist.

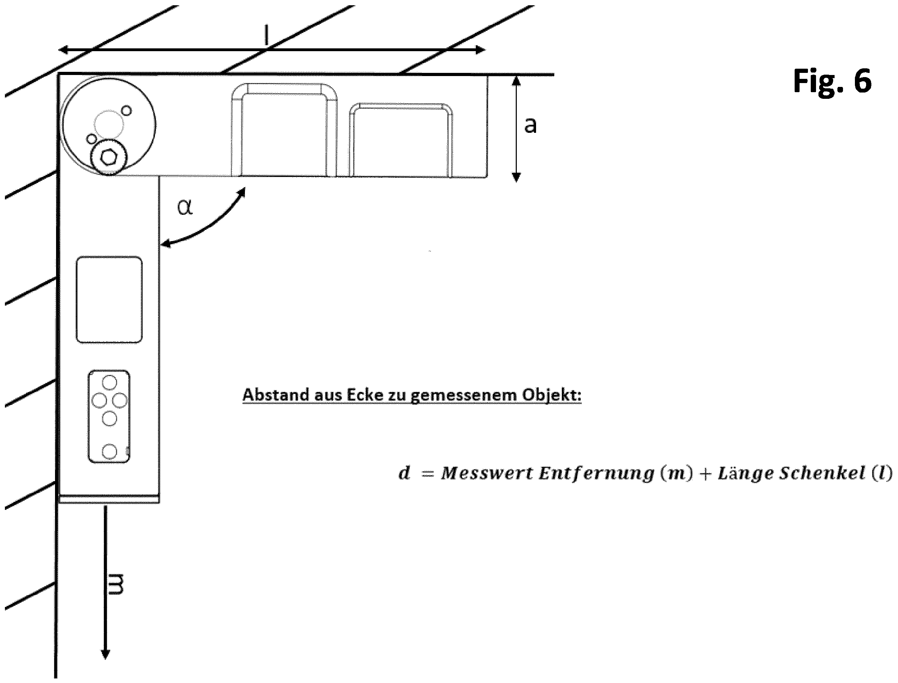

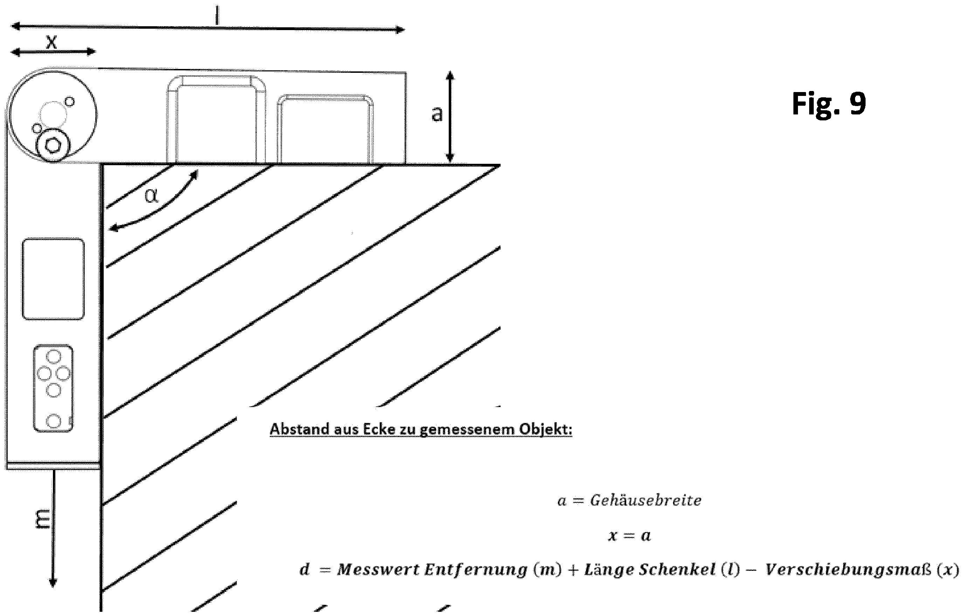

Die Streckenlänge x ist dabei derart definiert (vgl. Fig. 6 und Fig. 9), dass x = 0, wenn α = 90° bei Vermessung eines Innenwinkels (Fig. 6), und dass x = a, wenn α = 90° bei Vermessung eines Außenwinkels (Fig. 9).

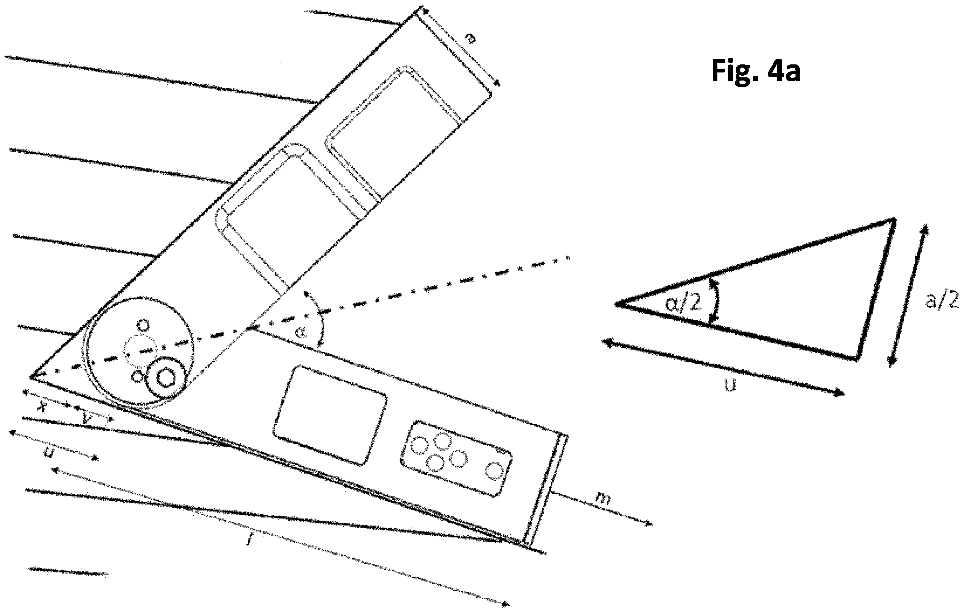

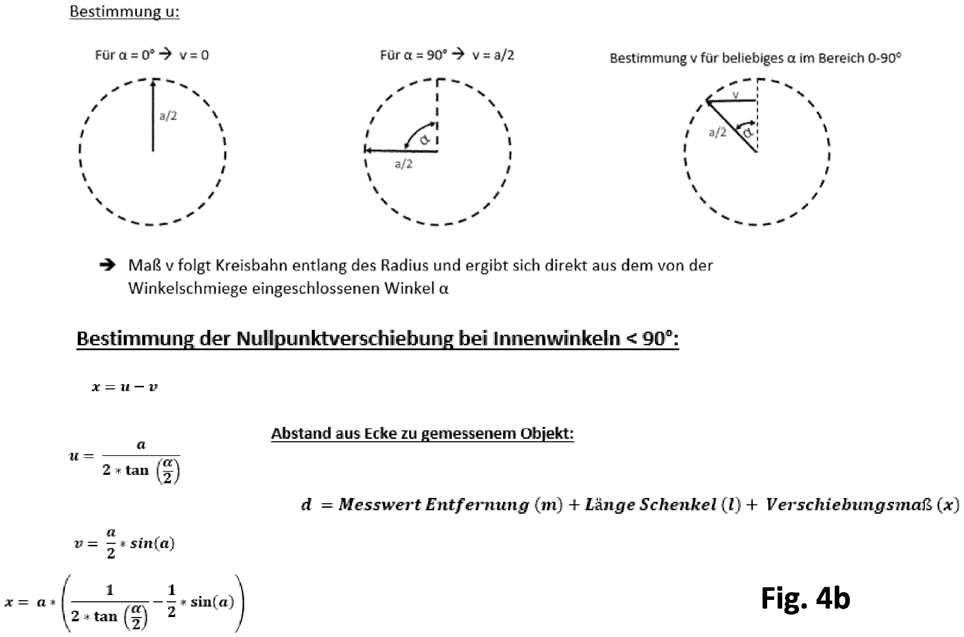

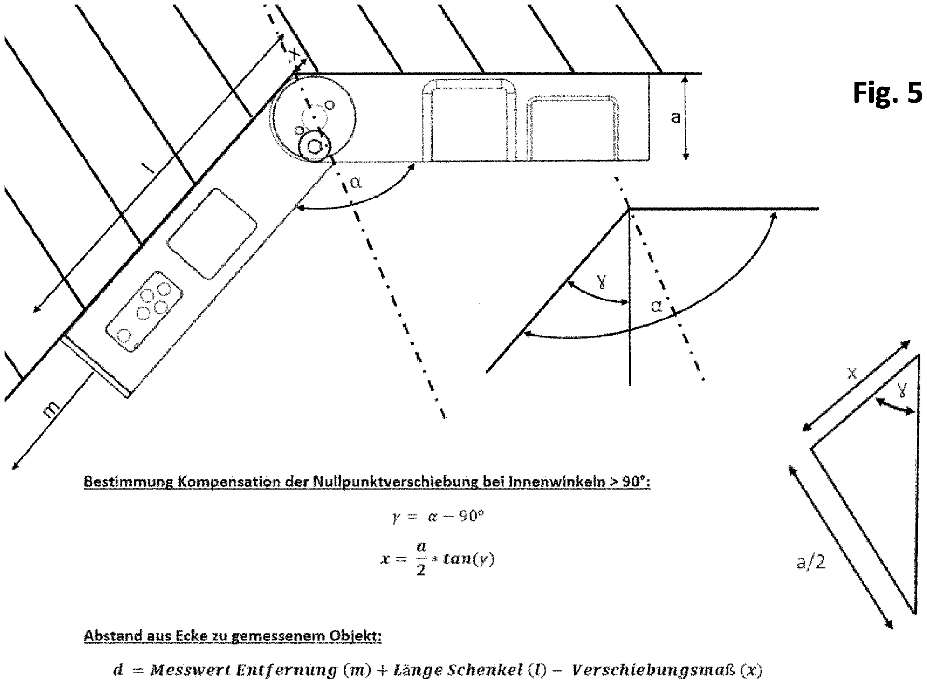

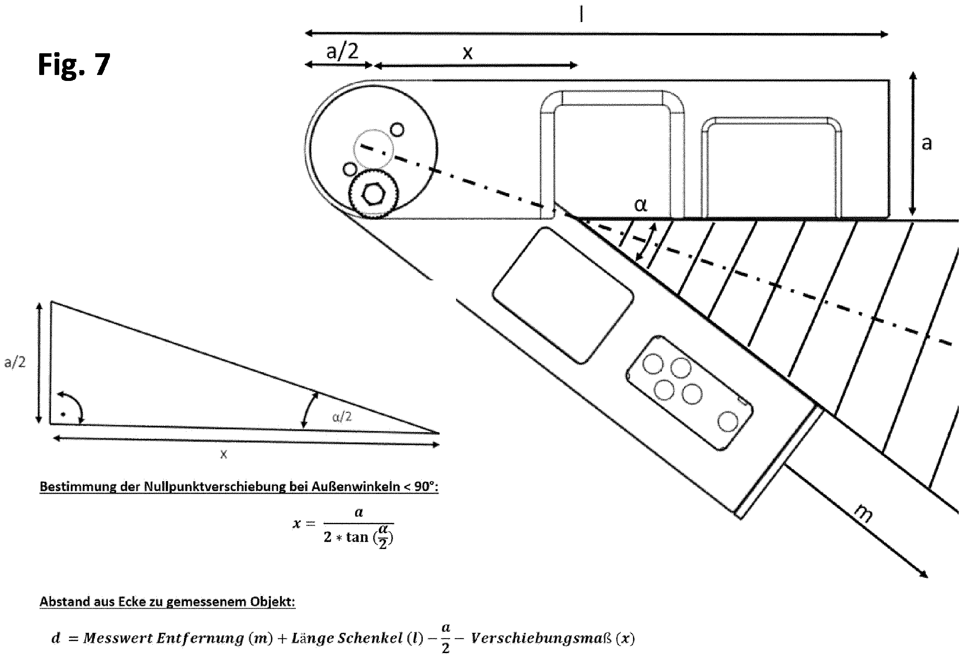

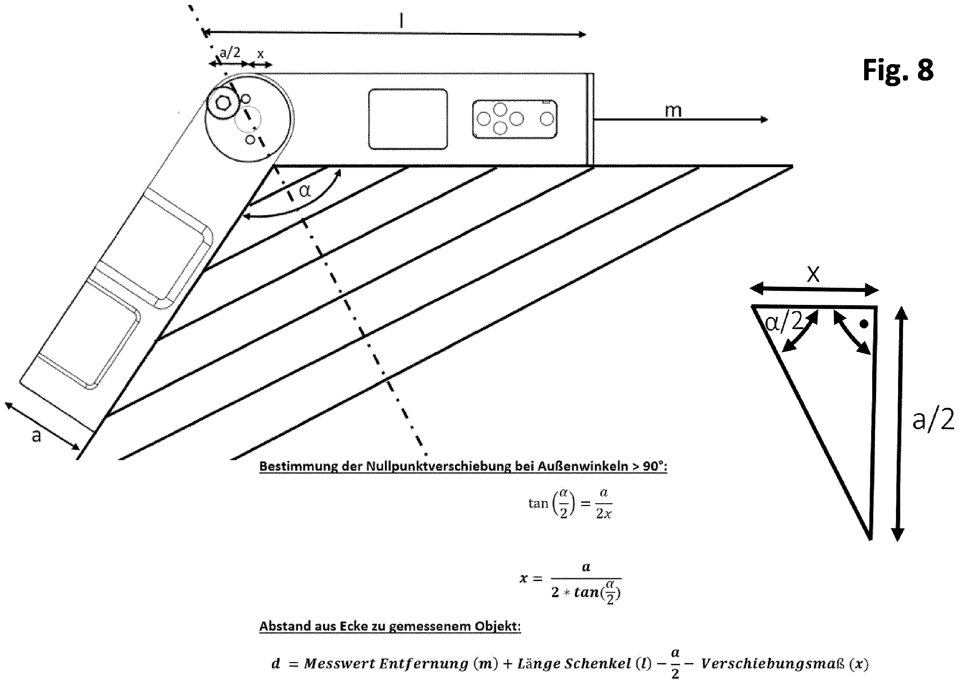

Aufgrund der vorstehend erwähnten Lage der Schwenkachse 23 kann somit für jeden Winkel α die Streckenlänge x - und damit der Abstand d - aus dem Winkel α und der bekannten Schenkelbreite a und somit aus der Geometrie des Handmessgeräts 11 berechnet werden. Dies ist in den Fig. 4a, 4b, 5 - 9 für die unterschiedlichen Fälle, die in der Praxis vorkommen, veranschaulicht, wobei angenommen wird, dass sowohl die Länge I als auch die Breite a der beiden Schenkel bzw. der betreffenden Gehäuse gleich ist. Die Formeln zur Berechnung des Abstandes d sind hier vergleichsweise einfach, da die Geometrie des Handmessgerätes 11 - wie vorstehend erläutert - vergleichsweise einfach ist.

Die Winkelabhängigkeit der Streckenlänge x, d.h. die beim Verändern des Winkels α auftretende Nullpunktverschiebung - also die Verschiebung der Schwenkachse 23 bzw. des Scheitelpunktes 51 entlang der Winkelhalbierenden 52 - kann also bei der Bestimmung des Abstands d automatisch berücksichtigt werden, da sich die Streckenlänge x aus dem gemessenen Winkel α und der gemessenen Entfernung m unter Berücksichtigung der bekannten Schenkellänge I berechnen lässt. Diese Berechnung wird automatisch mittels des Mikrocontroller 25 der Verarbeitungseinrichtung 21 durchgeführt, dem der jeweilige Winkelmesswert α und der jeweilige Entfernungsmesswert m zugeführt werden.

Das Handmessgerät 11 zeichnet sich folglich unter anderem dadurch aus, dass der Verarbeitungseinrichtung 21 die Winkelabhängigkeit der Streckenlänge x bekannt ist, und zwar insofern, als diese Streckenlänge x aus der Geometrie des Handmessgeräts - wie erläutert - berechnet werden kann.

Alternativ kann auch dadurch dafür gesorgt werden, dass der Verarbeitungseinrichtung die Winkelabhängigkeit der Streckenlänge x bekannt ist, dass das Handmessgerät 11 kalibriert und somit die Winkelabhängigkeit empirisch ermittelt wird. Beispielsweise kann eine Tabelle erzeugt werden, die für jeden Winkelwert α die jeweilige Streckenlänge x enthält und beispielsweise im Speicher 25 der Verarbeitungseinrichtung 21 abgelegt wird.

Während eines jeweiligen Messvorgangs kann folglich die Verarbeitungseinrichtung 21 aus einem jeweiligen Winkelmesswert α den zugehörigen Wert für die Streckenlänge x durch Berechnen oder durch Ablesen aus der erwähnten, im Speicher 25 hinterlegten Tabelle ermittelt.

Eine empirische Ermittlung der Winkelabhängigkeit der Streckenlänge x kommt insbesondere dann in Frage, wenn das Handmessgerät 11 derart aufgebaut ist, dass die Schwenkachse 23 beispielsweise konstruktionsbedingt so positioniert werden soll und die Breiten der Schenkel 13, 15 so unterschiedlich gewählt werden sollen, dass ein Berechnen alleine aufgrund einfacher geometrischer Gegebenheiten nicht möglich oder zu aufwändig ist.

Das Handmessgerät 11 ist des Weiteren mit einer kombinierten Anzeige- und Bedieneinheit 27, 29 versehen, die beispielsweise in Form eines berührungsempfindlichen Displays vorgesehen sein kann. Wie im Einleitungsteil erwähnt, kann hier beispielsweise das Handmessgerät 11 ein- und ausgeschaltet, die Helligkeit des Displays verändert oder zwischen unterschiedlichen Einheitensystemen gewechselt werden. Auf dem Display können einer Bedienperson z.B. die Messwerte für den Winkel α und für die Entfernung m angezeigt werden. Ferner ist es möglich, dass auf der Anzeigeeinheit 27 ein sich aus aufeinanderfolgenden Einzelmessungen nach und nach aufbauender digitaler Grundriss eines zu vermessenden Raumes angezeigt wird. Alternativ oder zusätzlich können aus den Messwerten des Winkels α und der Entfernung m abgeleitete Größen angezeigt werden.

Das Handmessgerät 11 ist außerdem mit einer Schnittstelle 31 versehen, die dazu ausgebildet ist, die Messwerte für den Winkel α und die Entfernung m oder daraus abgeleitete Daten drahtlos an eine oder mehrere externe Einrichtungen 33 zu übermitteln. Bei dieser externen Einrichtung kann es sich beispielsweise um ein Werkzeug, z.B. eine Handkreissäge, ein Smartphone, ein Tablet oder ein Notebook handeln, wie dies in Fig. 1 schematisch dargestellt ist. Die Datenübertragung kann beispielsweise über Bluetooth, NFC oder WLAN erfolgen.

In Fig. 1 ist zur Vereinfachung dargestellt, dass die Entfernungsmesseinrichtung 19 die Messstrahlung, beispielsweise die Laserstrahlung, bezüglich der Breite a des Schenkels 15 mittig aussendet. In diesem Fall wird die Entfernung zur jeweiligen Raumecke 49 nur dann exakt gemessen, wenn die beiden Wände einen rechten Winkel bilden. Bei einer Abweichung von einem rechten Winkel ergibt sich somit eine Messungenauigkeit für die Entfernung, die entweder in Kauf genommen werden kann, wenn sie vernachlässigbar ist, oder die aufgrund einer vorher oder nachher erfolgenden Messung des betreffenden Winkels z.B. im Rahmen der Erstellung eines Grundrisses korrigiert werden kann. Alternativ oder zusätzlich kann die Entfernungsmesseinrichtung 19 derart ausgebildet oder am Schenkel 15 positioniert sein, dass die Aussendung der Strahlung so nahe wie möglich an der während der Messung an der Wand anliegenden Außenseite 15a des Schenkels 15 erfolgt.

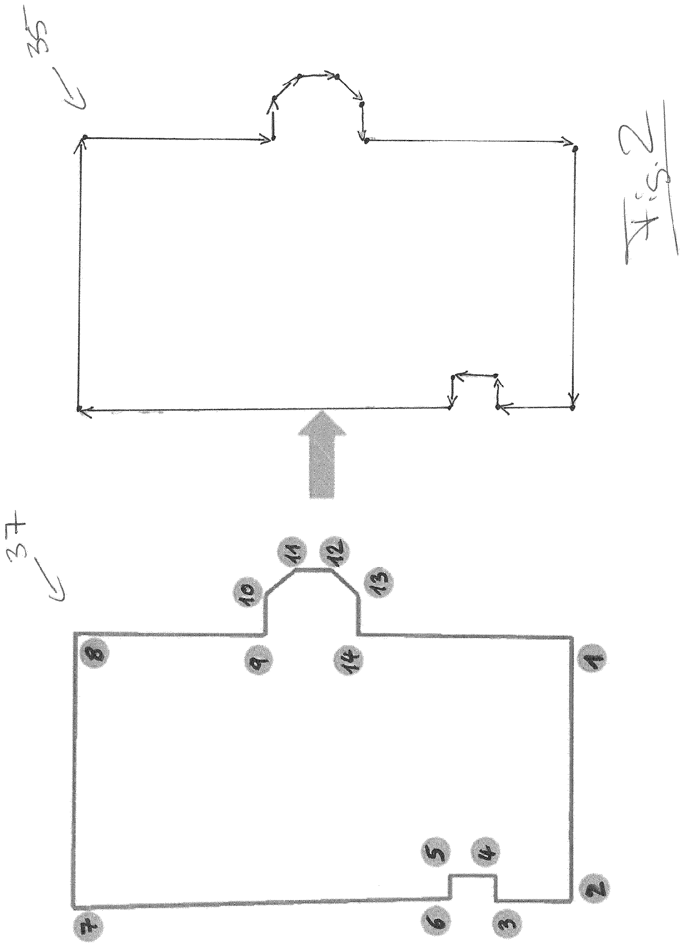

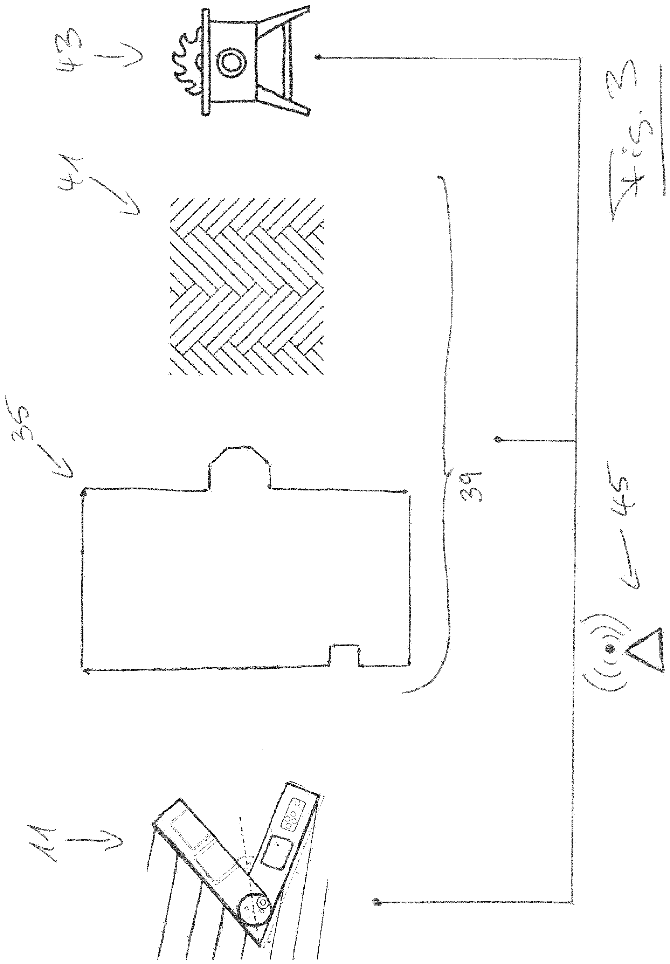

Die Fig. 2 und 3 zeigen schematisch eine Anwendung eines erfindungsgemäßen Ausmesssystems, das zusätzlich zu einer Auswerteeinrichtung ein Handmessgerät umfasst, welches erfindungsgemäß ausgebildet ist. Ein erfindungsgemäßes Handmessgerät ist aber nicht zwingend, wenn eine Nichtberücksichtigung einer Nullpunktverschiebung akzeptiert oder vernachlässigt werden kann, beispielsweise dann, wenn eine ausreichend große Anzahl der zu messenden Winkel nicht oder nur wenig von einem rechten Winkel abweichen.

Bei dem mit dem Ausmesssystem durchführbaren erfindungsgemäßen Verfahren wird eine digitale Ansicht einer realen räumlichen Gegebenheit erzeugt. Im Beispiel der Fig. 2 ist die reale räumliche Gegebenheit ein Grundriss 37 eines Raumes eines Gebäudes, wobei die handwerkliche Anwendung darin besteht, auf dem Boden dieses Raumes ein Parkett zu verlegen. Das Verfahren besteht darin, aus einer Vielzahl von mittels des Handmessgeräts durchgeführten Einzelmessungen - im Beispiel der Fig. 2 vierzehn Einzelmessungen - eine digitale Ansicht 35 des Grundrisses 37 zu erzeugen. Jede Einzelmessung liefert - wie vorstehend erläutert - einen Winkel für die Raumecke und einen Abstand zur nächsten Raumecke und damit letztlich einen Vektor in der parallel zum Boden des Raumes verlaufenden Ebene. Alle vierzehn digitalen Vektoren bilden zusammen eine geschlossene digitale Kontur - nämlich die zu erzeugende digitale Ansicht 35 des Grundrisses 37 - mit anderen Worten den digitalen Grundriss - , womit der reale Grundriss 37 hinsichtlich aller relevanten Größen, also aller Raumecken-Winkel und Raumecken-Abstände, bekannt ist.

Wie in Fig. 3 schematisch angedeutet, kann mittels der Auswerteeinrichtung 39 aus der digitalen Ansicht 35, die aus den mittels des Handmessgeräts 11 durchgeführten Einzelmessungen bzw. den dabei ermittelten Messwerten besteht, ein hier nur schematisch angedeuteter Bearbeitungsplan 41 erstellt und an eine Bearbeitungsmaschine 43, beispielsweise eine Tischkreissäge, übermittelt werden.

Wie im Einleitungsteil erläutert, kann der Bearbeitungsplan 41 eine Schnittliste für die einzelnen zu verlegenden Parkettstücke bilden, die von einer Bedienperson nacheinander jeweils hinsichtlich Winkel und Länge der einzelnen Parkettstücke in einem Zug an der Bearbeitungsmaschine 43 abgearbeitet werden kann. Der Bearbeitungsplan 41 kann aufgrund der den Grundriss 37 des Raumes repräsentierenden digitalen Ansicht 35 die Positionen und somit die Verlege-Reihenfolge aller Parkettstücke vorgeben. Im Anschluss an das Zuschneiden aller Parkettstücke kann die Bedienperson das Parkett in einem Zug verlegen.

Die Übermittlung 45 der Messwerte bzw. Daten von dem Handmessgerät 11 über die Auswerteeinrichtung 39 an die Bearbeitungsmaschine 43 erfolgt drahtlos, beispielsweise über Bluetooth, NFC oder WLAN.

Die Auswerteeinrichtung 39 kann in das Handmessgerät 11, beispielsweise dessen Verarbeitungseinrichtung 21, integriert sein, so dass die digitale Ansicht 35 und der Bearbeitungsplan 41 im Handmessgerät 11 vorliegen und direkt vom Handmessgerät 11 an die Bearbeitungsmaschine 43 übermittelt werden können. Die Auswerteeinrichtung 39 kann aber auch Bestandteil der Bearbeitungsmaschine 43 sein. Alternativ kann die Verarbeitungseinrichtung 21 ein Bestandteil eines weiteren externen Gerätes sein, beispielsweise eines Smartphones, eines Tablets, eines Notebooks oder eines stationären Rechners. Die Auswertung der mittels des Handmessgeräts 11 ermittelten Messwerte kann also beispielsweise durch eine App auf einem Smartphone oder einem Tablet erfolgen und von diesem an die Bearbeitungsmaschine 43 übertragen werden.

### Bezugszeichenliste

- 11: Handmessgerät
- 13: Schenkel
- 13a: Außenseite
- 15: Schenkel
- 15a: Außenseite
- 17: Winkelmesseinrichtung
- 19: Entfernungsmesseinrichtung
- 21: Verarbeitungseinrichtung
- 22: Mikrocontroller
- 23: Schwenkachse
- 25: Speicher
- 27: Anzeigeeinheit
- 29: Bedieneinheit
- 31: Schnittstelle
- 33: externe Einrichtung
- 35: digitale Ansicht
- 37: räumliche Gegebenheit, Grundriss
- 39: Auswerteeinrichtung
- 41: Bearbeitungsplan
- 43: Bearbeitungsmaschine
- 45: Übermittlung
- 47: Raumecke
- 49: Raumecke
- 50: Schnittlinie
- 51: Scheitelpunkt
- 52: Winkelhalbierende
- 53: Fenster

## Patentansprüche

1. Handmessgerät (11) zur Ermittlung von für eine Werkstückbearbeitung erforderlichen Werten zu wenigstens zwei Messgrößen, nämlich zu einem Winkel (α) und zu wenigstens einem Abstand (d),
wobei das Handmessgerät (11) zwei Schenkel (13, 15), eine Winkelmesseinrichtung (17), eine Entfernungsmesseinrichtung (19) und eine Verarbeitungseinrichtung (21) umfasst,
wobei die Schenkel (13, 15) eine Messebene aufspannen und um eine senkrecht zur Messebene verlaufende Schwenkachse (23) relativ zueinander verschwenkbar sind, wobei die Winkelmesseinrichtung (17) dazu ausgebildet ist, einen Wert für den Winkel (α) zwischen den beiden Schenkeln (13, 15) zu messen,
wobei die Entfernungsmesseinrichtung (19) dazu ausgebildet ist, in Verlängerung eines der Schenkel (15) eine Entfernung (m) zu messen,
wobei die Verarbeitungseinrichtung (21) dazu ausgebildet, aus der gemessenen Entfernung (m) und einer Strecke (I+x), deren Länge mit dem Winkel (α) zwischen den Schenkeln (13, 15) variiert, einen Wert für den Abstand (d) zu bestimmen, und
wobei der Verarbeitungseinrichtung (21) die Abhängigkeit der Länge der Strecke von dem Winkel (α) bekannt ist und die Verarbeitungseinrichtung (21) dazu ausgebildet ist, beim Bestimmen des Wertes für den Abstand (d) automatisch die Winkelabhängigkeit der Länge der Strecke (I+x) zu berücksichtigen.

2. Handmessgerät nach Anspruch 1,
wobei die Verarbeitungseinrichtung (21) beim Bestimmen des Wertes für den Abstand (d) die bekannte Länge (I) des Schenkels (15), in dessen Verlängerung die Entfernungsmesseinrichtung (19) die Entfernung (m) misst, oder einen Teil davon berücksichtigt.

3. Handmessgerät nach Anspruch 1 oder 2,
wobei die Winkelabhängigkeit der Länge der Strecke (I+x) empirisch ermittelt worden und in der Verarbeitungseinrichtung (21) selbst oder in einem für diese zugänglichen Speicher, insbesondere einem Speicher (25) des Handmessgeräts (11), abgelegt ist.

4. Handmessgerät nach Anspruch 1 oder 2,
wobei das Handmessgerät (11) derart ausgebildet ist, dass die Winkelabhängigkeit der Länge der Strecke (I+x) aus der Geometrie des Handmessgerätes (11) berechenbar ist.

5. Handmessgerät nach einem der vorhergehenden Ansprüche,
wobei die Schenkel (13, 15) die gleiche in der Messebene gemessene Breite (α) aufweisen und die Schwenkachse (23) mit der Schnittgeraden der beiden auf der Messebene senkrecht stehenden Mittelebenen der beiden Schenkel (13, 15) zusammenfällt, oder
wobei die Schenkel (13, 15) von unterschiedlicher Breite sind und die Schwenkachse (23) auf der Mittelebene eines der beiden Schenkel (13, 15) liegt, insbesondere desjenigen Schenkels (15), in dessen Verlängerung die Entfernungsmesseinrichtung (19) die Entfernung (m) misst.

6. Handmessgerät nach einem der vorhergehenden Ansprüche,
wobei der Übergang zwischen den beiden Schenkeln (13, 15) abgerundet ist, insbesondere wobei der Übergang von einem Kreisbogen gebildet ist, dessen Mittelpunkt auf der Schwenkachse (23) liegt, insbesondere wobei eine den Mittelpunkt und den Scheitelpunkt (51) des Übergangs verbindende Gerade die Winkelhalbierende des jeweils eingestellten Winkels (α) zwischen den Schenkeln (13, 15) ist.

7. Handmessgerät nach einem der vorhergehenden Ansprüche,
wobei die Winkelmesseinrichtung (17) dazu ausgebildet ist, sowohl Innenwinkel als auch Außenwinkel jeweils von 90°, kleiner als 90° und größer als 90° zu messen.

8. Handmessgerät nach einem der vorhergehenden Ansprüche,
wobei zumindest einer der Schenkel (15) eine Anzeigeeinheit (27) aufweist, auf der die Messwerte und/oder daraus abgeleitete Daten für eine Bedienperson darstellbar sind.

9. Handmessgerät nach einem der vorhergehenden Ansprüche,
wobei zumindest einer der Schenkel (15) eine Bedieneinheit (29) aufweist.

10. Handmessgerät nach einem der vorhergehenden Ansprüche,
wobei das Handmessgerät (11) zumindest eine Schnittstelle (31) für eine drahtlose oder drahtgebundene Übermittlung der Messwerte und/oder von daraus abgeleiteten Daten an eine oder mehrere externe Einrichtungen (33) umfasst.

11. Ausmesssystem zum, insbesondere automatischen, Erzeugen einer digitalen Ansicht (35) einer realen räumlichen Gegebenheit (37), insbesondere eines Grundrisses eines Raumes eines Gebäudes, aus einer Mehrzahl von Einzelmessungen, die jeweils für eine Werkstückbearbeitung erforderliche Werte zu wenigstens zwei Messgrößen liefern, nämlich zu einem Winkel (α) und zu wenigstens einem Abstand (d),
mit einem Handmessgerät (11), insbesondere einem Handmessgerät nach einem der vorstehenden Ansprüche, zur Durchführung der Einzelmessungen und
mit einer Auswerteeinrichtung (39), die dazu ausgebildet ist, aus den Werten der Einzelmessungen die digitale Ansicht (35) zu erzeugen.

12. Ausmesssystem nach Anspruch 11,
wobei die Auswerteeinrichtung (39) dazu ausgebildet ist, aus den Werten der Einzelmessungen und/oder aus der daraus erzeugten digitalen Ansicht (35) einen Bearbeitungsplan (41) für zumindest eine zur Werkstückbearbeitung vorgesehene Bearbeitungsmaschine (43) abzuleiten.

13. Bearbeitungssystem mit einem Handmessgerät (11) nach einem der Ansprüche 1 bis 10 oder mit einem Ausmesssystem nach Anspruch 11 oder 12, und mit einer Bearbeitungsmaschine (43),
wobei zumindest die Messwerte einer der Messgrößen und/oder aus diesen Messwerten abgeleitete Daten an die Bearbeitungsmaschine (43) übertragbar sind und die Bearbeitungsmaschine wenigstens eine Einstelleinrichtung aufweist, die entsprechend den zu der Messgröße übertragenen Messwerten bzw. Daten automatisch verstellbar ist.

14. Ausmesssystem nach Anspruch 13,
wobei das Handmessgerät (11) zumindest eine Schnittstelle (31) für eine drahtlose oder drahtgebundene Übermittlung (45) der Messwerte und/oder von daraus abgeleiteten Daten an die Bearbeitungsmaschine (43) umfasst, wobei die Übermittlung an die Bearbeitungsmaschine direkt von dem Handmessgerät (11) an die Bearbeitungsmaschine (43) oder indirekt über eine oder mehrere externe Einrichtungen (33) erfolgt.

15. Verfahren zum, insbesondere automatischen, Erzeugen einer digitalen Ansicht (35) einer realen räumlichen Gegebenheit (37), insbesondere eines Grundrisses eines Raumes eines Gebäudes, aus einer Mehrzahl von Einzelmessungen, die jeweils für eine Werkstückbearbeitung erforderliche Werte zu wenigstens zwei Messgrößen liefern, nämlich zu einem Winkel (α) und zu wenigstens einem Abstand (d), wobei bei dem Verfahren
- mittels eines Handmessgeräts (11), insbesondere eines Handmessgeräts nach einem der Ansprüche 1 bis 10, die Einzelmessungen nacheinander durchgeführt werden, und
- mittels einer Auswerteeinrichtung (39) aus den Werten der Einzelmessungen die digitale Ansicht (35) erzeugt wird,
insbesondere wobei aus jeder Einzelmessung ein Vektor in einer Ebene gebildet und aus allen Vektoren die digitale Ansicht (35) in Form einer geschlossenen Kontur in der Ebene gebildet wird.
